(19) **Europäisches Patentamt / European Patent Office / Office européen des brevets**

(11) **EP 4 672 122 A1**

(12) **EUROPEAN PATENT APPLICATION**
published in accordance with Art. 153(4) EPC

(43) Date of publication:
**31.12.2025 Bulletin 2026/01**

(21) Application number: **24778014.1**

(22) Date of filing: **26.03.2024**

(51) International Patent Classification (IPC):
**G06Q 30/0201** (2023.01)

(52) Cooperative Patent Classification (CPC):
Y02D 10/00

(86) International application number:
**PCT/CN2024/083838**

(87) International publication number:
**WO 2024/199226 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 CN 202310305114**

(71) Applicant: **Hangzhou Humpback Whale Technology Co., Ltd.**
**Hangzhou, Zhejiang 311202 (CN)**

(72) Inventors:
- **YE, Shengxuan**
  **Hangzhou, Zhejiang 311202 (CN)**
- **ZHOU, Chen**
  **Hangzhou, Zhejiang 311202 (CN)**
- **ZHENG, Zhongchen**
  **Hangzhou, Zhejiang 311202 (CN)**
- **SUN, Rongzhe**
  **Hangzhou, Zhejiang 311202 (CN)**

(74) Representative: **Metida**
**Gyneju str. 16**
**01109 Vilnius (LT)**

(54) **METHOD FOR EVALUATING STORE BY COMBINING RELATED INDEXES OF SURROUNDING ENVIRONMENT OF STORE**

(57)     The disclosure provides a method for evaluating a store by combining relevant indexes of surrounding environment of the store, which includes: collecting geographic information data around an off-line store; statistically modeling subjects around the off-line store; reasonably extracting a thematic feature index SSTI; establishing a linear regression model evaluation system; and applying the theme feature index SSTI to real business scenarios. In the disclosure, by quantifying the geographical information and natural environment around a target area into data in eight dimensions, it is convenient for users to quickly and efficiently grasp the surrounding environment, and combined with the geographical information and related natural features as index scores, to evaluate the store's operating conditions or operating requirements, and provide reference for store location, store grouping and store management. The eight indexes can also serve as a prediction feature of a store operation, and the regression model can be used to observe whether the surrounding environment has significant impact on a focused index such as a passenger flow and a size of generated impact, and also have guiding significance to the business.

FIG. 1

S1 — collecting geographic information data around an off-line store;

S2 — statistically modeling subjects around the off-line store;

S3 — reasonably extracting a thematic feature index SSTI;

S4 — establishing a linear regression model evaluation system;

S5 — applying the thematic feature index SSTI to real business scenarios

## Description

### TECHNICAL FIELD

The disclosure relates to the technical field of commercial evaluation of stores, in particular to a method for evaluating a store by combining relevant indexes of surrounding environment of the store.

### BACKGROUND ART

Commercial users usually need to have objective understanding of geographical environment, business environment and crowd around an evaluation point when they conduct actions such as store location, user grouping and profile, and off-line store comparison tests, so as to facilitate evaluation operations. A large-scale store spatio-temporal index is a series of large-scale store geographical environment thematic scores with certain business guiding significance and related indexes for measuring people's travel convenience and comfort, abstracted by statistical modeling of surrounding geographic information and weather data, which perfectly meets needs of the commercial users, helps them to have an objective and clear view of the surrounding environment of the store, and improve efficiency of its evaluation operations.

Currently, most of the evaluation operations are to collect geographical information through field survey by personnel, and then get regional geographical environment scores by means of expert evaluation and voting. Field collection of information by personnel consumes a lot in terms of personnel cost and time cost and it cannot be ensured that information collection is complete, which cannot be used as an evaluation method for a large area. Moreover, the geographical environment scores obtained by expert evaluation is too subjective and an evaluation result is seriously affected by personal factors.

### SUMMARY

A method for evaluating a store by combining relevant indexes of surrounding environment of the store is provided in the disclosure provides, which can effectively solve problems in the background art that field collection of information by personnel consumes a lot in terms of personnel cost and time cost and it cannot be ensured that information collection is complete, which cannot be used as an evaluation method for a large area, and the geographical environment scores obtained by expert evaluation is too subjective and an evaluation result is seriously affected by personal factors.

In order to achieve above objects, the disclosure provides a following technical scheme: a method for evaluating a store by combining relevant indexes of surrounding environment of the store, which mainly quantifies a thematic score of geographical environment with business value and strong interpretability from geographical information, and evaluates an operation condition or operation demand ability of the store by combining the geographical information and related natural features as index scores, so as to provide a reference for a business scene of the store.

the method includes following evaluation steps:

S1, collecting geographic information data around an off-line store;

S2, statistically modeling subjects around the off-line store;

S3, reasonably extracting a thematic feature index SSTI;

S4, establishing a linear regression model evaluation system; and

S5, applying the thematic feature index SSTI to real business scenarios.

According to the above technical scheme, the collecting the geographic information data around the off-line store in the step S1 mainly includes obtaining geographic information around a target store by using different data sources, and the geographic information mainly includes environmental information around the store and related natural features.

After the geographical information is obtained, facilities near the target store are divided into eight categories of themes: transportation, residence, shopping, food, tourism, life, work and entertainment. Meanwhile, for each of themes, a number of facilities of this theme near the target store and their distance information from the target store are obtained.

According to the above technical scheme, the statistically modeling subjects around the off-line store in the step S2 mainly includes establishing a theme intensity model and a theme aggregation model, and combining results of the two models to generate a large-scale spatio-temporal index under the theme.

This disclosure mainly takes data of a certain brand as an example, the linear regression model is combined to verify impact of the large-scale time-space index on a passenger flow. After it is verified, the large time-space index can be applied to a real business scene of a brand, which helps improve evaluation efficiency of the brand on the surrounding environment of the store, and finally serves as an important reference for demand of store location.

According to the above technical scheme, specifically, in the statistically modeling in the step S2, a theme score of environment at a store's geographical location is affected by count intensity and aggregation of points of interest of a theme around the store, and by taking the POIs (Point of Informations) around the store as a sample, a following model is established for distribution of the POIs of the theme around the store:

$$\text{Loc}\left(\text{POI}_t^{(s)}\right) \overset{\text{i.i.d}}{\sim} \mathcal{B}\left(p_t^{(s)}\right) \overset{\text{indep.}}{\times} \mathcal{N}\left(0, \Sigma_t^{(s)}\right)$$

$$p_t^{(s)} \sim \mathbb{B}(\alpha_t, \beta_t), \; \sigma_t^{(s)} \sim \mathcal{N}(\mu_t, \lambda_t)$$

in which

s indicates the store;

t indicates the theme, including eight categories: transportation, residence, shopping, food, tourism, life, work and entertainment;

$\text{Loc}\left(\text{POI}_t^{(s)}\right)$ indicates the distribution of the POIs of the theme around the store;

$\mathcal{B}\left(p_t^{(s)}\right)$ indicates an intensity model of the POIs of the theme around the store, which obeys a Bernoulli distribution;

$p_t^{(s)}$ indicates a probability parameter of the intensity model for the POIs of the theme around the store, which conforms to a beta distribution;

$\alpha_t$, $\beta_t$ indicate variables of an intensity parameter distribution model;

$\mathcal{N}\left(0, \Sigma_t^{(s)}\right)$ indicates an aggregation model of the POIs of the theme around the store, which obeys a two-dimensional normal distribution;

$\Sigma_t^{(s)}$ indicates variance of the aggregation model of the POIs of the theme around the store, which conforms to a Gaussian distribution and satisfies $\Sigma_t^{(s)} = \begin{bmatrix} \left(\sigma_t^{(s)}\right)^2 & 0 \\ 0 & \left(\sigma_t^{(s)}\right)^2 \end{bmatrix}$, and $\left(\sigma_t^{(s)}\right)^2$ indicates variance of longitudes or latitudes of the POIs; and

$\mu_t$, $\lambda_t$ indicates variables of an aggregation parameter distribution model.

According to the above technical scheme, in the step S2, a model-based computing process includes an input, an output and a computing process, which are specifically as follows:

input: t, which indicates an evaluation theme, including eight categories: transportation, residence, shopping, food, tourism, life, work and entertainment;

m: a total number of evaluated stores;

$n_t^{(s)}$ : a number of POIs inquired for s stores of a theme t;

$N_t^{(s)}$ : a number of times of POIs being inquired for the s stores of the theme t;

$p_t^{(s)}$ : an initial probability parameter of an intensity model for POI of the s stores of the theme t;

$\sigma_t^{(s)}$ : a standard deviation of distances between all of POIs of the s stores of the theme t and the stores;

$\left(x_i^{(s)}, y_i^{(s)}\right)$ : coordinates of a i-th POI point near a s store relative to the store;

$\alpha, \beta$: an inter-store intensity model obeying a beta distribution a priori, $\alpha, \beta$ being variables of the model;

$\mu, \lambda$: an inter-store aggregation model obeying a Gaussian distribution a priori, $\mu, \lambda$ being variables of the model; and

output: $SSTI_t^{(s)}$ : a score of s stores under the theme t.

According to the above technical scheme, the computing process in the step S2 is as follows:

1), the process is executed for each t;

2), a cycle begins;

3) in the intensity model, intensity of the POIs of the theme around the store obeys the Bernoulli distribution, its probability parameters obey the beta distribution, and a joint probability density function of the intensity model is:

$$\mathcal{B}(\alpha, \beta, p) = \left(\frac{\Gamma(\alpha+\beta)}{\Gamma(\alpha)\Gamma(\beta)}\right)^m \left(\prod_{s=1}^m \left(p_t^{(s)}\right)^{\left(\alpha-1+n_t^{(s)}\right)} \left(1 - p_t^{(s)}\right)^{\left(\beta-1+N_t^{(s)}-n_t^{(s)}\right)}\right);$$

4) according to maximum likelihood estimation, a partial derivative of $\mathcal{B}(\alpha, \beta, p)$ about p is set to 0, and p for the theme is expressed as $p_t$, where the probability parameter of the intensity model of each store is $p_t^{(s)}$ ;

5) in the aggregation model, the POIs of the theme around the store obey the two-dimensional normal distribution, variance of the aggregation model of the POIs obeys the Gaussian distribution, and a joint probability density function of aggregation is:

$$\mathcal{N}(\lambda, \mu, \sigma) = \prod_{s=1}^m \left(\frac{1}{\lambda\sqrt{2\pi}} e^{-\frac{\left(\sigma_t^{(s)}-\mu\right)^2}{2\lambda^2}} \left(\prod_{i=1}^{n_t^{(s)}} \frac{1}{2\pi\left(\sigma_t^{(s)}\right)^2} e^{\frac{\left(x_i^{(s)}\right)^2 + \left(y_i^{(s)}\right)^2}{2\left(\sigma_t^{(s)}\right)^2}}\right)\right);$$

6) according to maximum likelihood estimation, a partial derivative of $\mathcal{N}(\lambda, \mu, \sigma)$ about $\sigma$ is set to 0, and $\sigma$ for the theme is expressed as $\sigma_t$, where a standard deviation of the aggregation model of each store is $\sigma_t^{(s)}$ ;

7) a probability parameter of the theme intensity model $p_t^{(s)}$ and a standard deviation of the aggregation model $\sigma_t^{(s)}$ for the theme t of each store are obtained;

8) the cycle ends;

9), a linear regression model is constructed with store information and real-time weather data as independent variables and with passenger flow data as a dependent variable;

10), $R^2$<-coefficient of determination;

11), AIC<-akaike information criterion;

12), BIC<-bayesian information criterion;

13), a computing method of the theme score $SSTI_t^{(s)} = \dfrac{p_t^{(s)}}{\sigma_t^{(s)}}$ is defined;

14), the process is executed for each t;

15), a cycle begins;

16), a theme score of the theme tof each store is obtained;

17), the theme score is added to the linear regression model;

18), $R_t^2$ , $AIC_t$ and $BIC_t$ after adding the theme score are obtained;

19), the cycle ends;

20), when effect of $R_t^2$ for respective themes t is not significantly improved or $AIC_t$ is too large or $BIC_t$ is too large;

21), a cycle begins;

22), a computing method of the theme score is redefined to perform steps 14 to 19;

23), $R_t^2$ , $AIC_t$ and $BIC_t$ are observed;

24), until the effect of $R_t^2$ for respective themes t is significantly improved and values of $AIC_t$ and $BIC_t$ are reasonable;

25), the cycle ends;

26), a score $SSTI_t^{(s)}$ of a corresponding t is reserved; and

27) $SSTI_t^{(s)}$ can be applied to real business scenarios such as location selection and grouping of stores of the brand, and provide reference for the theme score in all dimensions for evaluators to choose an optimal geographical environment.

According to the above technical scheme, the reasonably extracting the thematic feature index SSTI in the step S3 mainly includes estimating $\hat{p}_t^{(s)}$ and $\hat{\sigma}_t^{(s)}$ for each theme and each store by using maximum likelihood estimation.

Specifically, a greater $\hat{p}_t^{(s)}$ indicates larger count intensity of the POIs of the theme around the store, and a larger $\hat{\sigma}_t^{(s)}$ indicates larger aggregation of the POIs of the theme around the store, and a following $SSTI_t^{(s)}$ is defined to describe the distribution of POIs under the theme of the store:

$$SSTI_t^{(s)} = \frac{p_t^{(s)}}{\sigma_t^{(s)}}$$

in which $\hat{p}_t^{(s)}$ is a probability parameter of the intensity model of the POIs of the theme t around the store s estimated by

MLE; and

$\widehat{\sigma}_t^{(s)}$ is a standard deviation of the aggregation model of the POIs of the theme t around the store s estimated by MLE, and

a higher score $\mathrm{SSTI}_t^{(s)}$ of the store indicates a more obvious thematic feature.

According to the above technical scheme, the establishing the linear regression model evaluation system in the step S4 specifically includes selecting an index that can be used for monitoring and can measure store's operation conditions or operation objectives, such as a passenger flow and a sales volume, and establishing a model by using geographic information indexes and other related natural features so that rationality of the geographic information indexes is reflected by fitting-degree gain of the model.

The linear regression model has good linear interpretation and feature compatibility, has a complete numerical feature evaluation and inference mechanism, and can simply describe gain of feature superposition, which has natural adaptability to evaluating the large-scale spatio-temporal features of off-line stores, and it does not need preconditions of a training set and a test set. Therefore, the linear regression model is used to evaluate positive of negative influence of independent variable features on dependent variables.

According to the above technical scheme, in the step S4, an index for measuring fitting degree of the model is set as a coefficient of determination, which indicates a percentage that can be explained by a regression relationship in total variation of a target variable, and a closer numerical value of the index to 1 indicates better fitting effect. The akachi information criterion and the bayesian information criterion can weigh complexity of the evaluation model and goodness of fitting data of the model, and smaller numerical values of them indicates better effect of the model.

The linear regression model is constructed with the store information, the real-time weather data and eight types of geographical environment indexes as the independent variables and the passenger flow data as the dependent variable. After the eight types of geographical environment features are added into the evaluation model separately, $R^2$ is improved, with most obvious effect for an traffic index followed by an entertainment index and a tourism index, interpretability of a target variable-passenger flow change is enhanced, and AIC and BIC of all of the indexes decreases, indicating that the model fits well, with no fitting phenomenon.

According to the above technical scheme, the applying the theme feature index SSTI to the real business scenarios in the step S5 mainly includes combining above inspection results to provide certain business guidance and reference value for the brand in terms of store location and store grouping.

Under other similar conditions, location of a new store can first consider places with convenient transportation and certain entertainment facilities, such as a commercial complex near a subway entrance, and at the same time, sites such as tourist attractions can also be considered. According to needs of realistic scenes, the store's large-scale space-time index can quantify objective digital basis of the surrounding environment for commercial users, and quickly improve operation efficiency of geographical evaluation.

Compared with related art, the disclosure has following beneficial effects that the disclosure is with a scientific and reasonable structure and safe and convenient use.

1. By quantifying the geographical information and natural environment around a target area into data in eight dimensions, including communication, residence, shopping, food, tourism, life, work and entertainment, it is convenient for users to quickly and efficiently grasp the surrounding environment, and combined with the geographical information and related natural features as the index scores, to evaluate the store's operating conditions or operating requirements, and provide reference for real scenes such as store location, store grouping and store management. In addition, the eight indexes can also serve as a prediction feature of store operation, and the regression model can be used to observe whether the surrounding environment has significant impact on a focused index such as a passenger flow and a size of generated impact, and also have guiding significance to the business.

Meanwhile, use of statistical modeling, which is an efficient and stable way, can greatly reduce personnel cost and eliminate influence of subjective factors. Moreover, the large-scale spatio-temporal index is not opposed to expert evaluation, and thus the large-scale spatio-temporal index can be used to assist experts in making more scientific and objective evaluation, which facilitates obtaining of better results and realizes quantification of a thematic score of geographical environment with business value and strong interpretability from the geographical information.

2. The linear regression model has good linear interpretation and feature compatibility, has a complete numerical feature evaluation and inference mechanism, and can simply describe gain of feature superposition, which has natural adaptability to evaluating the large-scale spatio-temporal features of off-line stores, and it does not need preconditions of a training set and a test set, so as to improve operation efficiency of geographical evaluation more quickly.

## BRIEF DESCRIPTION OF THE DRAWINGS

The accompanying drawings are provided for further understanding of the disclosure and constitute a part of the specification, and together with embodiments of the disclosure, serve to explain the disclosure and do not constitute limitation on the disclosure.
In the drawings:

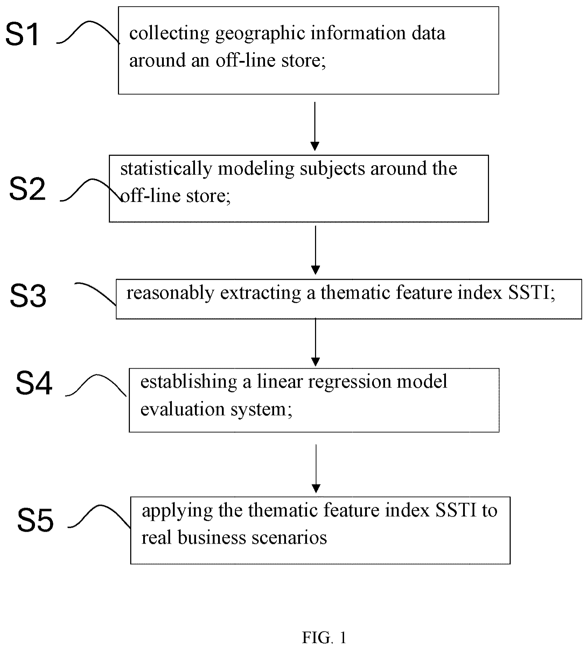

FIG. 1 is a flowchart of steps of an evaluation method according to the disclosure.

## DETAILED DESCRIPTION

Preferred embodiments of the disclosure will be described below with reference to the accompanying drawings, and it should be understood that preferred embodiments described herein are only intended to illustrate and explain the disclosure, but not to limit the disclosure.
Embodiment: As shown in FIG.1, the disclosure provides a technical scheme: a method for evaluating a store by combining relevant indexes of surrounding environment of the store, which mainly quantifies a thematic score of geographical environment with business value and strong interpretability from geographical information, and evaluates an operation condition or operation demand ability of the store by combining the geographical information and related natural features as index scores, so as to provide a reference for a business scene of the store.
the method comprises following evaluation steps:

S1, collecting geographic information data around an off-line store;

S2, statistically modeling subjects around the off-line store;

S3, reasonably extracting a thematic feature index SSTI;

S4, establishing a linear regression model evaluation system; and

S5, applying the thematic feature index SSTI to real business scenarios.

Based on the above technical scheme, the collecting the geographic information data around the off-line store in the step S1 mainly includes obtaining geographic information around a target store by using different data sources, and the geographic information mainly includes environmental information around the store and related natural features.
After the geographical information is obtained, facilities near the target store are divided into eight categories of themes: transportation, residence, shopping, food, tourism, life, work and entertainment. Meanwhile, for each of themes, a number of facilities of this theme near the target store and their distance information from the target store are obtained.
Based on the above technical scheme, the statistically modeling subjects around the off-line store in the step S2 mainly includes establishing a theme intensity model and a theme aggregation model, and combining results of the two models to generate a large-scale spatio-temporal index under the theme.
This disclosure mainly takes data of a certain brand as an example, the linear regression model is combined to verify impact of the large-scale time-space index on a passenger flow. After it is verified, the large time-space index can be applied to a real business scene of a brand, which helps improve evaluation efficiency of the brand on the surrounding environment of the store, and finally serves as an important reference for demand of store location.
Based on the above technical scheme, specifically, in the statistically modeling in the step S2, a theme score of environment at a store's geographical location is affected by count intensity and aggregation of points of interest of a theme around the store, and taking the POIs around the store as a sample, a following model is established for distribution of the POIs of the theme around the store:

$$\mathrm{Loc}\left(\mathrm{POI}_t^{(s)}\right) \overset{i.i.d}{\sim} \mathcal{B}\left(\mathrm{p}_t^{(s)}\right) \overset{indep.}{\times} \mathcal{N}\left(0, \Sigma_t^{(s)}\right)$$

$$\mathrm{p}_t^{(s)} \sim \mathbb{B}(\alpha_t, \beta_t), \ \sigma_t^{(s)} \sim \mathcal{N}(\mu_t, \lambda_t)$$

in which

s indicates the store;

t indicates the theme, including eight categories: transportation, residence, shopping, food, tourism, life, work and entertainment;

$\text{Loc}\left(\text{POI}_t^{(s)}\right)$ indicates the distribution of the POIs of the theme around the store;

$\mathcal{B}\left(p_t^{(s)}\right)$ indicates an intensity model of the POIs of the theme around the store, which obeys a Bernoulli distribution;

$p_t^{(s)}$ indicates a probability parameter of the intensity model for the POIs of the theme around the store, which conforms to a beta distribution;

$\alpha_t$, $\beta_t$ indicate variables of an intensity parameter distribution model;

$\mathcal{N}\left(0, \Sigma_t^{(s)}\right)$ indicates an aggregation model of the POIs of the theme around the store, which obeys a two-dimensional normal distribution;

$\Sigma_t^{(s)}$ indicates variance of the aggregation model of the POIs of the theme around the store, which conforms to a Gaussian distribution and satisfies $\Sigma_t^{(s)} = \begin{bmatrix} \left(\sigma_t^{(s)}\right)^2 & 0 \\ 0 & \left(\sigma_t^{(s)}\right)^2 \end{bmatrix}$, and $\left(\sigma_t^{(s)}\right)^2$ indicates variance of longitudes or latitudes of the POIs; and

$\mu_t$, $\lambda_t$ indicates variables of an aggregation parameter distribution model.

Based on the above technical scheme, in the step S2, a model-based computing process includes an input, an output and a computing process, which are specifically as follows:

input: t, which indicates an evaluation theme, including eight categories: transportation, residence, shopping, food, tourism, life, work and entertainment;

m: a total number of evaluated stores;

$n_t^{(s)}$: a number of POIs inquired for s stores of a theme t;

$N_t^{(s)}$: a number of times of POIs being inquired for the s stores of the theme t;

$p_t^{(s)}$: an initial probability parameter of an intensity model for POI of the s stores of the theme t;

$\sigma_t^{(s)}$: a standard deviation of distances between all of POIs of the s stores of the theme t and the stores;

$\left(x_i^{(s)}, y_i^{(s)}\right)$: coordinates of a i-th POI point near a s store relative to the store;

$\alpha$, $\beta$: an inter-store intensity model obeying a beta distribution a priori, $\alpha$, $\beta$ being variables of the model;

$\mu$, $\lambda$: an inter-store aggregation model obeying a Gaussian distribution a priori, $\mu$, $\lambda$ being variables of the model; and

output: $\mathrm{SSTI}_t^{(s)}$ : a score of s stores under the theme t.

Based on the above technical scheme, the computing process in the step S2 is as follows:

1), the process is executed for each t;

2), a cycle begins;

3) in the intensity model, intensity of the POIs of the theme around the store obeys the Bernoulli distribution, its probability parameters obey the beta distribution, and a joint probability density function of the intensity model is:

$$\mathcal{B}(\alpha,\beta,p) = \left(\frac{\Gamma(\alpha+\beta)}{\Gamma(\alpha)\Gamma(\beta)}\right)^m \left(\prod_{s=1}^{m}\left(p_t^{(s)}\right)^{\left(\alpha-1+n_t^{(s)}\right)}\left(1-p_t^{(s)}\right)^{\left(\beta-1+N_t^{(s)}-n_t^{(s)}\right)}\right);$$

4) according to maximum likelihood estimation, a partial derivative of $\mathcal{B}(\alpha,\beta,p)$ about p is set to 0, and p for the theme is expressed as pt, where the probability parameter of the intensity model of each store is $p_t^{(s)}$;

5) in the aggregation model, the POIs of the theme around the store obey the two-dimensional normal distribution, variance of the aggregation model of the POIs obeys the Gaussian distribution, and a joint probability density function of aggregation is:

$$\mathcal{N}(\lambda,\mu,\sigma) = \prod_{s=1}^{m}\left(\frac{1}{\lambda\sqrt{2\pi}}e^{-\frac{\left(\sigma_t^{(s)}-\mu\right)^2}{2\lambda^2}}\left(\prod_{i=1}^{n_t^{(s)}}\frac{1}{2\pi\left(\sigma_t^{(s)}\right)^2}e^{\frac{\left(x_i^{(s)}\right)^2+\left(y_i^{(s)}\right)^2}{2\left(\sigma_t^{(s)}\right)^2}}\right)\right);$$

6) according to maximum likelihood estimation, a partial derivative of $\mathcal{N}(\lambda,\mu,\sigma)$ about $\sigma$ is set to 0, and $\sigma$ for the theme is expressed as $\sigma_t$, where a standard deviation of the aggregation model of each store is $\sigma_t^{(s)}$;

7) a probability parameter of the theme intensity model $p_t^{(s)}$ and a standard deviation of the aggregation model $\sigma_t^{(s)}$ for the theme t of each store are obtained;

8), the cycle ends;

9), a linear regression model is constructed with store information and real-time weather data as independent variables and with passenger flow data as a dependent variable;

10), $R^2$<-coefficient of determination;

11), AIC<-akaike information criterion;

12), BIC<-bayesian information criterion;

13), a computing method of the theme score $\mathrm{SSTI}_t^{(s)} = \frac{p_t^{(s)}}{\sigma_t^{(s)}}$ is defined;

14), the process is executed for each t;

15), a cycle begins;

16), a theme score of the theme t of each store is obtained;

17), the theme score is added to the linear regression model;

18), $R_t^2$, $AIC_t$ and $BIC_t$ after adding the theme score are obtained;

19), the cycle ends;

20), when effect of $R_t^2$ for respective themes t is not significantly improved or $AIC_t$ is too large or $BIC_t$ is too large;

21), a cycle begins;

22), a computing method of the theme score is redefined to perform steps 14 to 19;

23), $R_t^2$, $AIC_t$ and $BIC_t$ are observed;

24), until the effect of $R_t^2$ for respective themes t is significantly improved and values of $AIC_t$ and $BIC_t$ are reasonable;

25), the cycle ends;

26), a score $SSTI_t^{(s)}$ of a corresponding t is reserved; and

27) $SSTI_t^{(s)}$ can be applied to real business scenarios such as location selection and grouping of stores of the brand, and provide reference for the theme score in all dimensions for evaluators to choose an optimal geographical environment.

Based on the above technical scheme, the reasonably extracting the thematic feature index SSTI in the step S3 mainly includes estimating $\hat{p}_t^{(s)}$ and $\hat{\sigma}_t^{(s)}$ for each theme and each store by using maximum likelihood estimation.

Specifically, a greater $\hat{p}_t^{(s)}$ indicates larger count intensity of the POIs of the theme around the store, and a larger $\hat{\sigma}_t^{(s)}$ indicates larger aggregation of the POIs of the theme around the store, and a following $SSTI_t^{(s)}$ is defined to describe the distribution of POIs under the theme of the store:

$$SSTI_t^{(s)} = \frac{p_t^{(s)}}{\sigma_t^{(s)}}$$

in which $\hat{p}_t^{(s)}$ is a probability parameter of the intensity model of the POIs of the theme t around the store s estimated by MLE; and

$\hat{\sigma}_t^{(s)}$ is a standard deviation of the aggregation model of the POIs of the theme t around the store s estimated by MLE, and a higher score $SSTI_t^{(s)}$ of the store indicates a more obvious thematic feature.

Based on the above technical scheme, the establishing the linear regression model evaluation system in the step S4 specifically includes selecting an index that can be used for monitoring and can measure store's operation conditions or operation objectives, such as a passenger flow and a sales volume, and establishing a model by using geographic information indexes and other related natural features so that rationality of the geographic information indexes is reflected by fitting-degree gain of the model.

The linear regression model has good linear interpretation and feature compatibility, has a complete numerical feature evaluation and inference mechanism, and can simply describe gain of feature superposition, which has natural adaptability to evaluating the large-scale spatio-temporal features of off-line stores, and it does not need preconditions of a training set and a test set. Therefore, the linear regression model is used to evaluate positive of negative influence of independent variable features on dependent variables.

Based on the above technical scheme, in the step S4, an index for measuring fitting degree of the model is set as a coefficient of determination, which indicates a percentage that can be explained by a regression relationship in total variation of a target variable, and a closer numerical value of the index to 1 indicates better fitting effect. The akachi information criterion and the bayesian information criterion can weigh complexity of the evaluation model and goodness of fitting data of the model, and smaller numerical values of them indicates better effect of the model.

The linear regression model is constructed with the store information, the real-time weather data and eight types of geographical environment indexes as the independent variables and the passenger flow data as the dependent variable. After the eight types of geographical environment features are added into the evaluation model separately, $R^2$ is improved, with most obvious effect for an traffic index followed by an entertainment index and a tourism index, interpretability of a target variable-passenger flow change is enhanced, and AIC and BIC of all of the indexes decreases, indicating that the model fits well, with no fitting phenomenon.

Based on the above technical scheme, the applying the theme feature index SSTI to the real business scenarios in the step S5 mainly includes combining above inspection results to provide certain business guidance and reference value for the brand in terms of store location and store grouping.

Under other similar conditions, location of a new store can first consider places with convenient transportation and certain entertainment facilities, such as a commercial complex near a subway entrance, and sites such as tourist attractions can also be considered. According to needs of realistic scenes, the store's large-scale space-time index can quantify objective digital basis of the surrounding environment for commercial users, and quickly improve operation efficiency of geographical evaluation.

Finally, it should be noted that the above is only preferred embodiments of the disclosure, and is not intended to limit the disclosure. Although the disclosure has been described in detail with reference to foregoing embodiments, it is still possible for a person skilled in the art to modify the technical schemes described in the foregoing embodiments or to replace some of their technical features equivalently. Any modification, equivalent substitution, improvement, etc. made within the spirit and principle of this disclosure shall be encompassed within the protection scope of this disclosure.

**Claims**

1. A method for evaluating a store by combining relevant indexes of surrounding environment of the store, which mainly quantifies a thematic score of geographical environment with business value and strong interpretability from geographical information, and evaluates an operation condition or operation demand ability of the store by combining the geographical information and related natural features as index scores, so as to provide a reference for a business scene of the store, wherein
the method comprises following evaluation steps:

   S1, collecting geographic information data around an off-line store;
   S2, statistically modeling subjects around the off-line store;
   S3, reasonably extracting a thematic feature index SSTI;
   S4, establishing a linear regression model evaluation system; and
   S5, applying the thematic feature index SSTI to real business scenarios.

2. The method for evaluating the store by combining relevant indexes of surrounding environment of the store according to claim 1, wherein the collecting the geographic information data around the off-line store in the step S1 mainly comprises obtaining geographic information around a target store by using different data sources, the geographic information mainly comprises environmental information around the store and related natural features; and
after the geographical information is obtained, facilities near the target store are divided into eight categories of themes: transportation, residence, shopping, food, tourism, life, work and entertainment, while for each of themes, a number of facilities of the theme near the target store and distance information from the target store are obtained.

3. The method for evaluating the store by combining relevant indexes of surrounding environment of the store according to claim 1, wherein the statistically modeling subjects around the off-line store in the step S2 mainly comprises establishing a theme intensity model and a theme aggregation model, and combining results of the two models to generate a large-scale spatio-temporal index under the theme; and

the linear regression model is mainly combined to verify impact of the large-scale time-space index on a passenger flow, and after verification, the large time-space index is applied to a real business scene of a brand, which helps improve evaluation efficiency of the brand on the surrounding environment of the store, and finally serves as an important reference for demand of store location.

4. The method for evaluating the store by combining relevant indexes of surrounding environment of the store according to claim 3, wherein in the statistically modeling in the step S2, a theme score of environment at a store's geographical location is affected by count intensity and aggregation of points of a theme around the store, and by taking POIs around the store as a sample, a following model is established for distribution of the POIs of the theme around the store:

$$\mathrm{Loc}\left(\mathrm{POI}_t^{(s)}\right) \overset{\mathrm{i.i.d}}{\sim} \mathcal{B}\left(\mathrm{p}_t^{(s)}\right) \overset{\mathrm{indep.}}{\times} \mathcal{N}\left(0, \Sigma_t^{(s)}\right)$$

$$\mathrm{p}_t^{(s)} \sim \mathbb{B}(\alpha_t, \beta_t), \ \sigma_t^{(s)} \sim \mathcal{N}(\mu_t, \lambda_t)$$

wherein:

s indicates the store;
t indicates the theme, comprising eight categories: transportation, residence, shopping, food, tourism, life, work and entertainment;

$\mathrm{Loc}\left(\mathrm{POI}_t^{(s)}\right)$ indicates the distribution of the POIs of the theme around the store;

$\mathcal{B}\left(\mathrm{p}_t^{(s)}\right)$ indicates an intensity model of the POIs of the theme around the store, which obeys a Bernoulli distribution;

$\mathrm{p}_t^{(s)}$ indicates a probability parameter of the intensity model for the POIs of the theme around the store, which conforms to a beta distribution;
$\alpha_t, \beta_t$ indicate variables of an intensity parameter distribution model;

$\mathcal{N}\left(0, \Sigma_t^{(s)}\right)$ indicates an aggregation model of the POIs of the theme around the store, which obeys a two-dimensional normal distribution;

$\Sigma_t^{(s)}$ indicates variance of the aggregation model of the POIs of the theme around the store, which conforms to a Gaussian distribution and satisfies $\Sigma_t^{(s)} = \begin{bmatrix} \left(\sigma_t^{(s)}\right)^2 & 0 \\ 0 & \left(\sigma_t^{(s)}\right)^2 \end{bmatrix}$, and $\left(\sigma_t^{(s)}\right)^2$ indicates variance of longitudes or latitudes of the POIs; and
$\mu_t, \lambda_t$ indicates variables of an aggregation parameter distribution model.

5. The method for evaluating the store by combining relevant indexes of surrounding environment of the store according to claim 3, wherein in the step S2, a model-based computing process includes an input, an output and a computing process, which are as follows:

input: t, which indicates an evaluation theme, including eight categories: transportation, residence, shopping, food, tourism, life, work and entertainment;
m: a total number of evaluated stores;

$\mathrm{n}_t^{(s)}$ : a number of POIs inquired for s stores of a theme t;

$\mathrm{N}_t^{(s)}$ : a number of times of POIs being inquired for the s stores of the theme t;

$\mathrm{p}_t^{(s)}$ : an initial probability parameter of an intensity model for POI of the s stores of the theme t;

$\sigma_t^{(s)}$ : a standard deviation of distances between all of POIs of the s stores of the theme t and the stores;

$\left(x_i^{(s)}, y_i^{(s)}\right)$ : coordinates of a i-th POI point near a s store relative to the store;

$\alpha$, $\beta$: an inter-store intensity model obeying a beta distribution a priori, $\alpha$, $\beta$ being variables of the model;

$\mu$, $\lambda$: an inter-store aggregation model obeying a Gaussian distribution a priori, $\mu$, $\lambda$ being variables of the model; and

output: $SSTI_t^{(s)}$ : a score of s stores under the theme t.

6. The method for evaluating the store by combining relevant indexes of surrounding environment of the store according to claim 5, wherein the computing process in the step S2 is as follows:

1), the process is executed for each t;

2), a cycle begins;

3) in the intensity model, intensity of the POIs of the theme around the store obeys the Bernoulli distribution, with probability parameters obeying the beta distribution, and a joint probability density function of the intensity model is:

$$\mathcal{B}(\alpha, \beta, p) = \left(\frac{\Gamma(\alpha+\beta)}{\Gamma(\alpha)\Gamma(\beta)}\right)^m \left(\prod_{s=1}^{m}\left(p_t^{(s)}\right)^{\left(\alpha-1+n_t^{(s)}\right)}\left(1 - p_t^{(s)}\right)^{\left(\beta-1+N_t^{(s)}-n_t^{(s)}\right)}\right);$$

4) according to maximum likelihood estimation, a partial derivative of $\mathcal{B}(\alpha, \beta, p)$ about p is set to 0, and p for the theme is expressed as pt, wherein the probability parameter of the intensity model of each store is $p_t^{(s)}$ ;

5) in the aggregation model, the POIs of the theme around the store obey the two-dimensional normal distribution, variance of the aggregation model of the POIs obeys the Gaussian distribution, and a joint probability density function of aggregation is:

$$\mathcal{N}(\lambda, \mu, \sigma) = \prod_{s=1}^{m}\left(\frac{1}{\lambda\sqrt{2\pi}}e^{-\frac{\left(\sigma_t^{(s)}-\mu\right)^2}{2\lambda^2}}\left(\prod_{i=1}^{n_t^{(s)}}\frac{1}{2\pi\left(\sigma_t^{(s)}\right)^2}e^{\frac{\left(x_i^{(s)}\right)^2+\left(y_i^{(s)}\right)^2}{2\left(\sigma_t^{(s)}\right)^2}}\right)\right);$$

6) according to maximum likelihood estimation, a partial derivative of $\mathcal{N}(\lambda, \mu, \sigma)$ about $\sigma$ is set to 0, and $\sigma$ for the theme is expressed as $\sigma_t$, where a standard deviation of the aggregation model of each store is $\sigma_t^{(s)}$ ;

7) a probability parameter of the theme intensity model $p_t^{(s)}$ and a standard deviation of the aggregation model $\sigma_t^{(s)}$ for the theme t of each store are obtained;

8), the cycle ends;

9), a linear regression model is constructed with store information and real-time weather data as independent variables and with passenger flow data as a dependent variable;

10), $R^2$<-coefficient of determination;

11), AIC<-akaike information criterion;

12), BIC<-bayesian information criterion;

13), a computing method of the theme score $SSTI_t^{(s)} = \frac{p_t^{(s)}}{\sigma_t^{(s)}}$ is defined;

14), the process is executed for each t;

15), a cycle begins;

16), a theme score of the theme tof each store is obtained;

17), the theme score is added to the linear regression model;

18), $R_t^2$, $AIC_t$ and $BIC_t$ after adding the theme score are obtained;

19), the cycle ends;

20), when effect of $R_t^2$ for respective themes t is not significantly improved or $AIC_t$ is too large or $BIC_t$ is too large;

21), repeated operations are performed in which

22), a computing method of the theme score is redefined to perform steps 14 to 19;

23), $R_t^2$, $AIC_t$ and $BIC_t$ are observed;

24), until the effect of $R_t^2$ for respective themes t is significantly improved and values of $AIC_t$ and $BIC_t$ are reasonable;

25), the cycle ends;

26), a score $SSTI_t^{(s)}$ of a corresponding t is reserved; and

27) $SSTI_t^{(s)}$ is applied to real business scenarios such as location selection and grouping of stores of the brand, and provide reference for the theme score in all dimensions for evaluators to choose an optimal geographical environment.

7. The method for evaluating the store by combining relevant indexes of surrounding environment of the store according to claim 1, wherein the reasonably extracting the thematic feature index SSTI in the step S3 comprises estimating $\hat{p}_t^{(s)}$ and $\hat{\sigma}_t^{(s)}$ for each theme and each store by using maximum likelihood estimation; and

a greater $\hat{p}_t^{(s)}$ indicates larger count intensity of the POIs of the theme around the store, and a larger $\hat{\sigma}_t^{(s)}$ indicates larger aggregation of the POIs of the theme around the store, and a following $SSTI_t^{(s)}$ is defined to describe the distribution of POIs under the theme of the store:

$$SSTI_t^{(s)} = \frac{p_t^{(s)}}{\sigma_t^{(s)}}$$

in which $\hat{p}_t^{(s)}$ is a probability parameter of the intensity model of the POIs of the theme t around the store s estimated by MLE; and

$\hat{\sigma}_t^{(s)}$ is a standard deviation of the aggregation model of the POIs of the theme t around the store s estimated by MLE, and a higher score $SSTI_t^{(s)}$ of the store indicates a more obvious thematic feature.

8. The method for evaluating the store by combining relevant indexes of surrounding environment of the store according to claim 1, wherein the establishing the linear regression model evaluation system in the step S4 comprises selecting an index that is capable of being used for monitoring and measuring store's operation conditions or operation objectives, and establishing a model by using geographic information indexes and other related natural features so that rationality of the geographic information indexes is reflected by fitting-degree gain of the model; and wherein the linear regression model has good linear interpretation and feature compatibility, has a complete numerical feature evaluation and inference mechanism, and is capble of simply describing gain of feature superposition, which has natural adaptability to evaluating the large-scale spatio-temporal features of off-line stores, and does not need preconditions of a training set and a test set; and the linear regression model is used to evaluate positive of negative influence of independent variable features on dependent variables.

9. The method for evaluating the store by combining relevant indexes of surrounding environment of the store according to claim 8, wherein in the step S4, an index for measuring fitting degree of the model is set as a coefficient of determination, which indicates a percentage that is capable of being explained by a regression relationship in total variation of a target variable, and a closer numerical value of the index to 1 indicates better fitting effect; and the akachi information criterion and the bayesian information criterion are capable of weighing complexity of the evaluation model and goodness of fitting data of the model, and smaller numerical values of them indicates better effect of the model; and

the linear regression model is constructed with the store information, the real-time weather data and eight types of geographical environment indexes as the independent variables and the passenger flow data as the dependent variable; and after the eight types of geographical environment features are added into the evaluation model separately, $R^2$ is improved, with most obvious effect for an traffic index followed by an entertainment index and a tourism index, interpretability of a target variable-passenger flow change is enhanced, and AIC and BIC of all of the indexes decreases, indicating that the model fits well, with no fitting phenomenon.

10. The method for evaluating the store by combining relevant indexes of surrounding environment of the store according to claim 1, wherein the applying the theme feature index SSTI to the real business scenarios in the step S5 comprises combining above inspection results to provide certain business guidance and reference value for a brand in terms of store location and store grouping; and

under other similar conditions, location of a new store first considers places with convenient transportation and certain entertainment facilities, and according to needs of realistic scenes, the store's large-scale space-time index quantifies objective digital basis of the surrounding environment for commercial users, and quickly improves operation efficiency of geographical evaluation.

**S1** collecting geographic information data around an off-line store;

**S2** statistically modeling subjects around the off-line store;

**S3** reasonably extracting a thematic feature index SSTI;

**S4** establishing a linear regression model evaluation system;

**S5** applying the thematic feature index SSTI to real business scenarios

FIG. 1

## INTERNATIONAL SEARCH REPORT

| | International application No. |
|---|---|
| | **PCT/CN2024/083838** |

**A.    CLASSIFICATION OF SUBJECT MATTER**

G06Q30/0201(2023.01)i

According to International Patent Classification (IPC) or to both national classification and IPC

**B.    FIELDS SEARCHED**

Minimum documentation searched (classification system followed by classification symbols)

IPC:G06Q, G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE:门店, 环境, 地址, 地理, 信息, 统计, 建模, 特征, 指标, 评估, 评价, establishment, environment, address, geography, information, statistics, modeling, features, metrics, assessment, evaluation

**C.    DOCUMENTS CONSIDERED TO BE RELEVANT**

| Category* | Citation of document, with indication, where appropriate, of the relevant passages | Relevant to claim No. |
|---|---|---|
| PX | CN 116402529 A (HANGZHOU HAMPBACK WHALE TECHNOLOGY CO., LTD.) 07 July 2023 (2023-07-07)<br>claims 1-10 | 1-10 |
| X | WO 2022198963 A1 (SOUTH CHINA UNIVERSITY OF TECHNOLOGY) 29 September 2022 (2022-09-29)<br>description, pages 1-5, and abstract | 1-3, 8-10 |
| A | CN 111242666 A (TCL CORP.) 05 June 2020 (2020-06-05)<br>entire document | 1-10 |
| A | CN 115170183 A (SHENZHEN SHUWEI BIG DATA TECHNOLOGY CO., LTD.) 11 October 2022 (2022-10-11)<br>entire document | 1-10 |
| A | WO 2019061665 A1 (PING AN TECHNOLOGY (SHENZHEN) CO., LTD.) 04 April 2019 (2019-04-04)<br>entire document | 1-10 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 June 2024** | **24 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 672 122 A1

<table>
<tr><td colspan="2"><strong>INTERNATIONAL SEARCH REPORT</strong><br><strong>Information on patent family members</strong></td><td colspan="2">International application No.<br><strong>PCT/CN2024/083838</strong></td></tr>
</table>

| Patent document cited in search report | | | Publication date (day/month/year) | Patent family member(s) | | | Publication date (day/month/year) |
|---|---|---|---|---|---|---|---|
| CN | 116402529 | A | 07 July 2023 | None | | | |
| WO | 2022198963 | A1 | 29 September 2022 | AU | 2021435561 | A1 | 03 November 2022 |
| | | | | CN | 113011925 | A | 22 June 2021 |
| CN | 111242666 | A | 05 June 2020 | HK | 40023218 | A0 | 27 November 2020 |
| CN | 115170183 | A | 11 October 2022 | None | | | |
| WO | 2019061665 | A1 | 04 April 2019 | US | 2021125131 | A1 | 29 April 2021 |
| | | | | JP | 2019533842 | A | 21 November 2019 |
| | | | | HK | 1249644 | A0 | 02 November 2018 |
| | | | | CN | 107730310 | A | 23 February 2018 |
| | | | | SG | 11201905560 | A1 | 30 July 2019 |

Form PCT/ISA/210 (patent family annex) (July 2022)

18